# EUROPEAN PATENT APPLICATION

(11) **EP 3 139 477 A1**
(43) Date of publication of application: **08.03.2017**
(21) Application number: 16186213.1
(22) Date of filing: 30.08.2016
(51) Int. Cl.: H02K 15/03, H01F 13/00, H01F 41/02

(54) **METHOD FOR MANUFACTURING AN INTERIOR PERMANENT MAGNET ROTOR UNIT AND APPARATUS FOR MANUFACTURING AN INTERIOR PERMANENT MAGNET ROTOR**

(30) Priority: 07.09.2015 JP 2015175968
(71) Applicant: JTEKT Corporation, Chuo-ku, Osaka-shi Osaka 542-8502 (JP)
(72) Inventor: SHIBATA, Yoshiyuki, Osaka-shi, Osaka, 542-8502 (JP)
(74) Representative: Winter, Brandl, Fürniss, Hübner, Röss, Kaiser, Polte - Partnerschaft mbB

(57) **Abstract**

In manufacturing permanent magnets by filling insertion holes of a core with a magnet material, the density of the magnetic flux entering the magnet material can be restrained from being limited by the saturation magnetic flux density of the core. A guide member 40 is placed so as to face a core 22 in an axial direction Da. An orienting/magnetizing device 30 faces the core 22 and the guide member 40 in the radial direction and applies a magnetic field to the guide member 40 and the core 22 in the radial direction. Insertion holes 24 of the core 22 are filled with the magnet material through guide holes 42 of the guide member 40. The magnetic field is therefore applied from the orienting/magnetizing device 30 to the magnet material passing through the guide holes 42.

## Description

### BACKGROUND OF THE INVENTION

### 1. Field of the Invention

The present invention relates to methods for manufacturing an interior permanent magnet rotor unit that includes a core having a plurality of insertion holes and permanent magnets embedded in the insertion holes of the core, one or more of the interior permanent magnet rotor units being connected together in the axial direction of the core to form a rotor, and an apparatus for manufacturing an interior permanent magnet rotor.

### 2. Description of the Related Art

Japanese Patent Application Publication No. 2014-143906 (JP 2014-143906 A) describes a method for manufacturing an interior permanent magnet rotor, in which an orienting/magnetizing device is placed so as to face a core in the radial direction, and with a magnetic field being applied in the radial direction of the core, insertion holes formed in the core are filled with a magnetic molding material (magnet material).

When a magnetic field is applied from a magnetizing device to the core, the density of the magnetic flux entering, through the core, the magnet material that is to fill the insertion holes depends on the saturation magnetic flux density of the core. For example, in the case where the core is made of permendur, the density of the magnetic flux entering the magnet material is higher than in the case where the core is made of electrical steel sheets. However, the cost is increased in the case where the core is made of permendur.

### SUMMARY OF THE INVENTION

It is one object of the present invention to provide a method for manufacturing an interior permanent magnet rotor unit and an apparatus for manufacturing an interior permanent magnet rotor, in which in a technique of manufacturing permanent magnets by filling insertion holes of a core with a magnet material, the density of magnetic flux entering the magnet material can be restrained from being limited by the saturation magnetic flux density of the core.

According to one aspect of the present invention, a method for manufacturing an interior permanent magnet rotor unit that includes a core having a plurality of insertion holes and permanent magnets embedded in the insertion holes of the core, the interior permanent magnet rotor unit or a plurality of the interior permanent magnet rotor units being connected together in an axial direction of the core to form a rotor, the method includes: placing a guide member having guide holes corresponding to the insertion holes of the core such that the guide member is adjacent to the core in the axial direction of the core; and applying a magnetic field in a radial direction of the guide member by an orienting/magnetizing device to apply the magnetic field to a magnet material, which is a material of the permanent magnets, in the guide holes when the magnet material passes through the guide holes, and filling the insertion holes of the core with the magnet material. A member in the guide member which forms a magnetic path going into the guide member from an outer periphery of the guide member which faces the orienting/magnetizing device, reaching the guide hole, and then returning to the outer periphery of the guide member has higher saturation magnetic flux density than the core.

In the above method, when the magnet material passes through the guide holes before filling the insertion holes, the magnetic field applied from the outer periphery of the guide member by the orienting/magnetizing device is applied to the magnet material through the guide member. The saturation magnetic flux density of the member that forms the magnetic path going from the orienting/magnetizing device to the guide holes through the guide member and returning to the orienting/magnetizing device through the guide member is higher than that of the core. This can increase the density of magnetic flux entering the magnet material as compared to the case where the magnetic field is applied in a radial direction of the core by the orienting/magnetizing device so that the magnetic field is applied to the magnet material in the insertion holes. Accordingly, in manufacturing the permanent magnets by filling the insertion holes of the core with the magnet material, the density of the magnetic flux entering the magnet material can be restrained from being limited by the saturation magnetic flux density of the core.

In the method of the above aspect, the guide member may include, in addition to a high magnetic permeability portion having higher saturation magnetic flux density than the core, a low magnetic permeability portion having lower magnetic permeability than the high magnetic permeability portion, and the low magnetic permeability portion may extend radially inward from the outer periphery of the guide member to the guide hole in a section of the guide member perpendicular to an axial direction of the guide member at a predetermined position in the axial direction.

A region located radially outside the guide holes may form a short circuit path, or a magnetic path along which magnetic flux from the orienting/magnetizing device returns to the orienting/magnetizing device without passing through the guide holes. In the section at the predetermined position, the low magnetic permeability portion extends from the outer periphery of the guide member to the guide holes. Accordingly, at least in the section at the predetermined position, every short circuit path includes the low magnetic permeability portion. This can reduce the amount of magnetic flux in the short circuit path.

In the method of the above aspect, the guide member may include, in addition to a high magnetic permeability portion having higher saturation magnetic flux density than the core, a low magnetic permeability portion having lower magnetic permeability than the high magnetic permeability portion, and the guide member may include a first section, or a section of the guide member which is perpendicular to an axial direction of the guide member at a first position in the axial direction, and in which magnetic flux having entered the guide member from the outer periphery of the guide member cannot avoid the low magnetic permeability portion before reaching the guide hole, and a second section, or a section of the guide member which is perpendicular to the axial direction of the guide member at a second position in the axial direction, and in which the magnetic flux having entered the guide member from the outer periphery of the guide member can avoid the low magnetic permeability portion before reaching the guide hole.

In the above method, magnetic resistance of the magnetic path along which the magnetic flux from the orienting/magnetizing device reaches the magnet material in the guide holes through the guide member and then returns to the orienting/magnetizing device through the guide member is smaller in the magnetic path formed in the second section than in the magnetic path formed in the first section. Accordingly, most of a part of the guide hole through which the magnetic flux passes is located in the second section. This is equivalent to or close to the state where a magnetic field is intermittently applied to the magnet material when the magnet material flows through the guide holes. This can facilitate movement of magnetic particles of the magnet material and improve the orientation rate.

In the case where the section of the guide member perpendicular to the axial direction of the guide member at the predetermined position in the axial direction in the method of the above aspect includes the first section, the density of the magnetic flux passing through the magnet material in the second section can be increased as compared to the case where there is no first section.

In the method of the above aspect, the guide hole may be formed such that its sectional area perpendicular to an axial direction of the guide member gradually increases as the guide hole extends toward the core and such that its sectional shape perpendicular to the axial direction is finally identical to a sectional shape of the insertion hole.

In the above method, the guide hole is formed such that its sectional area gradually increases and its sectional shape is finally identical to the sectional shape of the insertion hole. This allows the magnet material to be gradually oriented in an orientation direction required in the insertion holes as it flows from the upstream side to the downstream side of the guide hole. In the case where the guide hole is formed to have the same sectional shape as that of the insertion hole at any position in the axial direction, a path through which the magnet material flows to the guide hole tends to be required to have a sectional shape gradually changing to be identical to the sectional shape of the guide hole. In other words, the path through which the magnet material flows to the guide hole tends to be required to have a sectional shape gradually changing to be identical to the sectional shape of the insertion hole. Applying a magnetic field in this path can improve the magnetization rate and the orientation rate as compared to the case of not applying a magnetic field in this path. In the case where a magnetic field is applied in this path, it is desirable that the guide hole be this path and the guide member be a member that defines this path. In this configuration, the orientation rate and the magnetization rate can therefore be efficiently improved by applying a magnetic field to the magnet material passing through the path whose sectional shape perpendicular to the axial direction gradually changes to be identical to the sectional shape of the insertion hole.

In the method of the above aspect, the orienting/magnetizing device may include a core facing portion that faces the core in a radial direction of the orienting/magnetizing device, and the core facing portion may apply the magnetic field to the core in the radial direction.

In the above method, the magnetic field is also applied from the core facing portion to the magnet material filling the insertion holes of the core. This can improve the orientation rate and the magnetization rate of the permanent magnets as compared to the case where the orienting/magnetizing device does not include the core facing portion.

In the method of the above aspect, the insertion holes may be filled with the magnet material by injection molding. In this configuration, the magnet material having fluidity is introduced into the insertion hole through the guide hole. When the magnet material has fluidity, the magnetic particles tend to be displaced, so that easy magnetization directions can be easily oriented in the same direction in the guide hole.

According to another aspect of the present invention, an apparatus for manufacturing an interior permanent magnet rotor includes: the orienting/magnetizing device and the guide member in the method of the above aspect.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a perspective view of rotor units according to an embodiment of the present invention;
FIG. 2 is a perspective view of a rotor unit and a manufacturing apparatus according to the embodiment;
FIG. 3 is a diagram of a guide hole in a guide member according to the embodiment;
FIG. 4 is a sectional view taken along line 4-4 in FIG. 3;
FIG. 5 is a sectional view taken along line 5-5 in FIG. 3;
FIG. 6 is a sectional view taken along line 6-6 in FIG. 3;
FIG. 7 is a sectional view taken along line 7-7 in FIG. 3;
FIG. 8 is a sectional view taken along line 8-8 in FIG. 3;
FIG. 9 is a sectional view taken along line 9-9 in FIG. 3;
FIG. 10A is a perspective view illustrating a placing step according to the embodiment; and
FIG. 10B is a perspective view illustrating a filling step according to the embodiment.

### DETAILED DESCRIPTION OF EMBODIMENTS

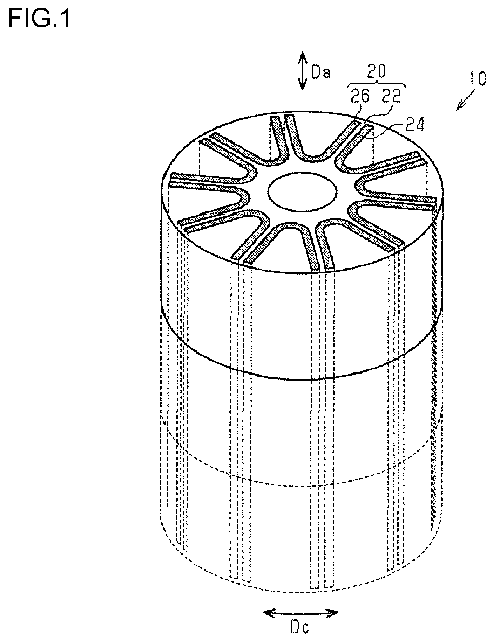

An embodiment of a method for manufacturing an interior permanent magnet rotor unit will be described with reference to the accompanying drawings. A rotor 10 shown in FIG. 1 forms an interior permanent magnet synchronous motor (IPMSM). The IPMSM is contained in an electric power steering system (EPS). The rotor 10 has a cylindrical shape. The rotor 10 according to the present embodiment is formed by connecting three interior permanent magnet rotor units (rotor units 20) in the direction of an axis of rotation (axial direction Da).

Each rotor unit 20 includes a core 22 and permanent magnets 26. The core 22 is formed by stacking a plurality of electrical steel sheets that are silicon steel sheets. The core 22 has 10 insertion holes 24 extending therethrough in the axial direction Da of the core 22. Each insertion hole 24 has a substantially U-shape in section perpendicular to the axial direction Da. The insertion holes 24 are arranged evenly in the circumferential direction Dc of the core 22. The permanent magnets 26 are embedded in the insertion holes 24. A mixture of magnetic particles and resin is used as a magnet material for the permanent magnets 26. The permanent magnets 26 are produced by magnetizing the magnet material.

A method for manufacturing the rotor unit 20 will be described below. In the present embodiment, the magnetization rate and the orientation rate of the permanent magnets 26 are improved by applying a magnetic field to the magnet material before filling the insertion holes 24 with the magnet material by using the core 22 as a mold. As used herein, the term "orientation rate" refers to the degree to which the easy magnetization directions match the direction parallel to the magnetic moment required for the permanent magnet 26. If the orientation rate is low, the magnetic flux flowing from the N pole to the S pole of the permanent magnet 26 as a result of magnetization has lower density. As used herein, the term "magnetization rate" refers to the degree to which the magnetic moment (magnetization direction) in a local area (magnetic domain) in the permanent magnet 26 matches one direction. Even if the orientation rate is high, the magnetic flux flowing from the N pole to the S pole of the permanent magnet 26 has lower density if the degree to which the magnetization direction matches one of the pair of easy magnetization directions is low. The present embodiment aims to increase the speed electromotive force coefficient of the IPMSM by increasing not only the magnetization rate but also the orientation rate and thus to increase torque that is generated by the IPMSM when a current of a predetermined magnitude is applied thereto.

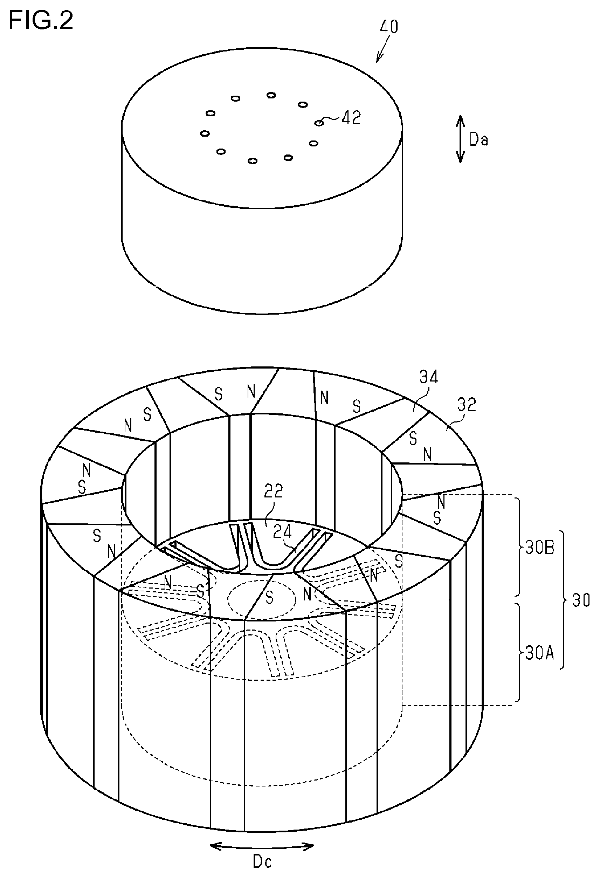

FIG. 2 shows an apparatus for manufacturing the rotor unit 20 according to the present embodiment. In FIG. 2, the insertion holes 24 of the core 22 have not been filled with the magnet material. In the following description, the manufacturing apparatus is sometimes described using the axial direction Da and the circumferential direction Dc of the core 22. This description is based on the positional relationship between the core 22 and the manufacturing apparatus (an orienting/magnetizing device 30 and a guide member 40) at the time of magnetizing the magnet material. When magnetizing the magnet material, the axial direction Da and the circumferential direction Dc of the core 22 match the axial direction and the circumferential direction of the orienting/magnetizing device 30 and the axial direction and the circumferential direction of the guide member 40. For example, the axial direction Da is therefore sometimes used to describe the axial direction of the guide member 40.

The manufacturing apparatus according to the present embodiment includes the orienting/magnetizing device 30 and the guide member 40. The orienting/magnetizing device 30 includes 10 permanent magnets 32 and 10 magnetizing yokes 34. The permanent magnets 32 and the magnetizing yokes 34 are alternately arranged in the circumferential direction Dc, and are formed into a single-piece annular body by using a nonmagnetic member, not shown. The orienting/magnetizing device 30 is disposed so as to surround the core 22 and to face the core 22 with predetermined clearance between the orienting/magnetizing device 30 and the outer peripheral surface of the core 22.

The permanent magnets 32 are disposed so as to be located outside the insertion holes 24 of the core 22 in the radial direction of the core 22. The width of each permanent magnet 32 in the circumferential direction Dc increases toward the outer peripheral surface of the orienting/magnetizing device 30. Each permanent magnet 32 has different magnetic poles on its both sides in the circumferential direction Dc. The permanent magnets 32 are arranged so as to be adjacent to each other in the circumferential direction Dc with the same magnetic poles facing each other. Each magnetizing yoke 34 is interposed between the same magnetic poles of two permanent magnets 32 that are adjacent to each other.

The length in the axial direction Da of the orienting/magnetizing device 30 is greater than that in the axial direction Da of the rotor unit 20. The orienting/magnetizing device 30 is a continuous member consisting of two portions, a core facing portion 30A and a guide facing portion 30B. In the manufacturing process, the inner peripheral surface of the core facing portion 30A faces the core 22, and the inner peripheral surface of the guide facing portion 30B faces the guide member 40.

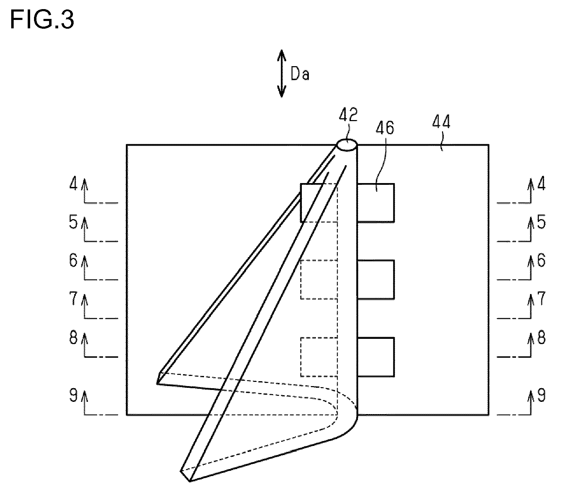

The guide member 40 has guide holes 42 into which the magnet material is introduced. FIG. 3 is a perspective view illustrating the shape of the guide hole 42. As shown in FIG. 3, the guide hole 42 is shaped such that its sectional area perpendicular to the axial direction Da increases toward the core 22 in the axial direction Da. In particular, the guide hole 42 is shaped such that its sectional shape perpendicular to the axial direction Da changes to be identical to the sectional shape of the insertion hole 24 of the core 22 as the guide hole 42 extends toward the core 22 in the axial direction Da.

The guide member 40 includes high magnetic permeability portions 44 and low magnetic permeability portions 46. The high magnetic permeability portions 44 have higher saturation magnetic flux density than the core 22, and the low magnetic permeability portions 46 have lower magnetic permeability than the high magnetic permeability portions 44. In the present embodiment, the high magnetic permeability portions 44 are made of permendur, and the low magnetic permeability portions 46 are made of stainless steel.

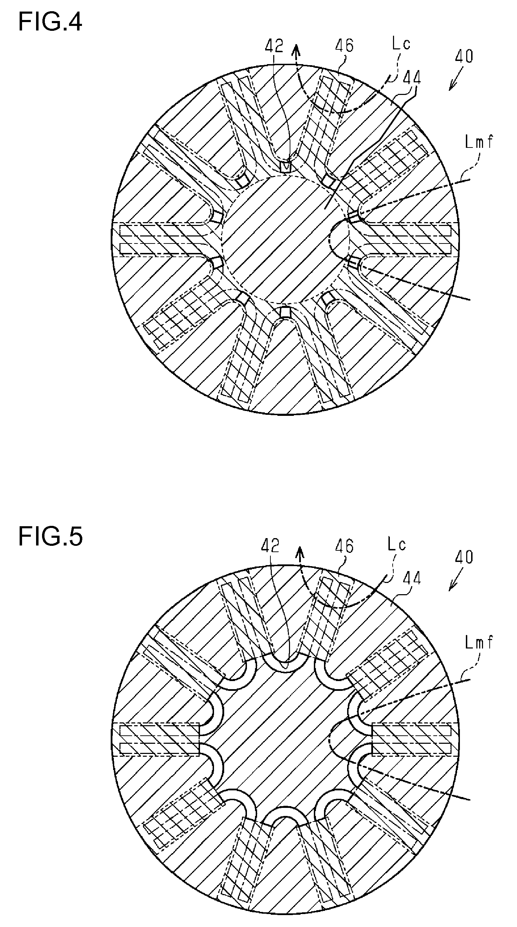

FIGS. 4, 6, and 8 show sections taken along lines 4-4, 6-6, and 8-8 in FIG. 3, respectively. The sections shown in FIGS. 4, 6, and 8 are sections of the guide member 40 perpendicular to the axial direction Da of the guide member 40. In FIGS. 4, 6, and 8, long dashed short dashed lines represent the guide holes 42 at the bottom surface of the guide member 40 which faces the core 22. The portions shown by the long dashed short dashed lines (guide holes 42) are the portions where the guide holes 42 are not formed in the sections shown in FIGS. 4, 6, and 8.

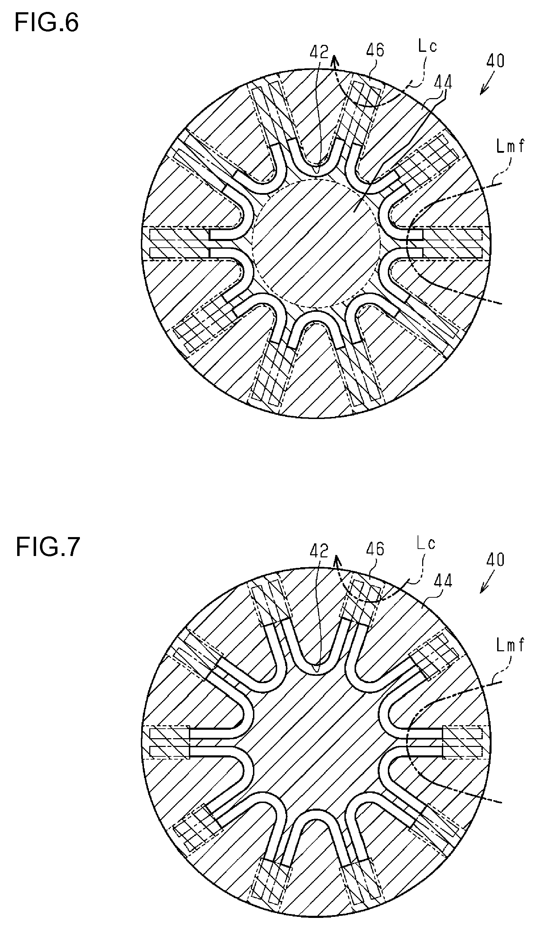

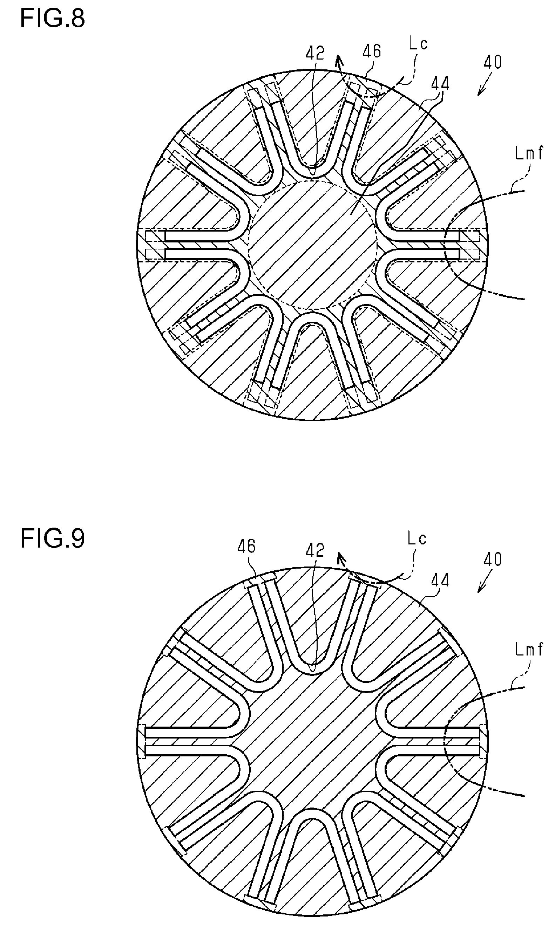

As shown in FIGS. 4, 6, and 8, the low magnetic permeability portions 46 surround the guide holes 42. Specifically, the low magnetic permeability portions 46 shown in FIG. 4 surround the guide holes 42 located above the bottom surface of the guide member 40 which faces the core 22 in the axial direction Da, except for the parts of the guide holes 42 shown in FIG. 4. Similarly, the low magnetic permeability portions 46 shown in FIG. 6 surround the guide holes 42 located above the bottom surface of the guide member 40 which faces the core 22 in the axial direction Da, except for the parts of the guide holes 42 shown in FIG. 6. The low magnetic permeability portions 46 shown in FIG. 8 surround the guide holes 42 located above the bottom surface of the guide member 40 which faces the core 22 in the axial direction Da, except for the parts of the guide holes 42 shown in FIG. 8. The low magnetic permeability portions 46 extend radially inward from the outer periphery of the guide member 40 to the guide holes 42. The high magnetic permeability portions 44 are disposed in the regions of the guide member 40 which face the magnetizing yokes 34 of the orienting/magnetizing device 30 and in the center of the guide member 40. In the sections shown in FIGS. 4, 6, and 8, every magnetic path Lmf going from the permanent magnet 32 of the orienting/magnetizing device 30 and returning to the permanent magnet 32 through the guide holes 42 passes through the low magnetic permeability portion 46. In the sections shown in FIGS. 4, 6, and 8, every short circuit path Lc going from the permanent magnet 32 of the orienting/magnetizing device 30 and returning to the permanent magnet 32 without passing through the guide holes 42 passes through the low magnetic permeability portion 46.

FIGS. 5 and 7 show sections taken along lines 5-5 and 7-7 in FIG. 3, respectively. The sections shown in FIGS. 5 and 7 are sections of the guide member 40 perpendicular to the axial direction Da of the guide member 40. In FIGS. 5 and 7, long dashed short dashed lines represent the guide holes 42 at the bottom surface of the guide member 40 which faces the core 22.

The low magnetic permeability portions 46 shown in FIG. 5 surround the guide holes 42 located above the bottom surface of the guide member 40 which faces the core 22 in the axial direction Da, except for the parts of the guide holes 42 shown in the section of FIG. 5. The low magnetic permeability portions 46 shown in FIG. 7 surround the guide holes 42 located above the bottom surface of the guide member 40 which faces the core 22 in the axial direction Da, except for the parts of the guide holes 42 shown in the section of FIG. 7. The low magnetic permeability portions 46 extend radially inward from the outer periphery of the guide member 40 to the guide holes 42. The high magnetic permeability portions 44 together with the guide holes 42 shown in FIGS. 5 and 7 surround the low magnetic permeability portions 46 from three directions. Accordingly, not every magnetic path Lmf going from the permanent magnet 32 of the orienting/magnetizing device 30 and returning to the permanent magnet 32 through the guide holes 42 passes through the low magnetic permeability portion 46. Every short circuit path Lc going from the permanent magnet 32 of the orienting/magnetizing device 30 and returning to the permanent magnet 32 without passing through the guide holes 42 includes the low magnetic permeability portion 46. Since the magnetic resistance of the low magnetic permeability portions 46 is greater than that of the magnet material 26a, the magnetic resistance of the short circuit paths Lc is greater than that of the magnetic paths Lmf passing through the magnet material 26a. Most of the magnetic flux from the permanent magnets 32 therefore tends to flow in the magnetic paths Lmf rather than in the short circuit paths Lc.

FIG. 9 shows a section taken along line 9-9 in FIG. 3. The section shown in FIG. 9 is a section of the guide member 40 perpendicular to the axial direction Da of the guide member 40. As shown in FIG. 9, the low magnetic permeability portions 46 extend in the radial direction from the outer periphery of the guide member 40 to the guide holes 42. Accordingly, every short circuit path Lc going from the permanent magnet 32 of the orienting/magnetizing device 30 and returning to the permanent magnet 32 without passing through the guide holes 42 includes the low magnetic permeability portion 46. Since the low magnetic permeability portion 46 are located only in the regions from the outermost parts of the guide holes 42 in the radial direction to the outer periphery of the guide member 40, not every magnetic path Lmf going from the permanent magnet 32 of the orienting/magnetizing device 30 and returning to the permanent magnet 32 through the guide holes 42 passes through the low magnetic permeability portion 46.

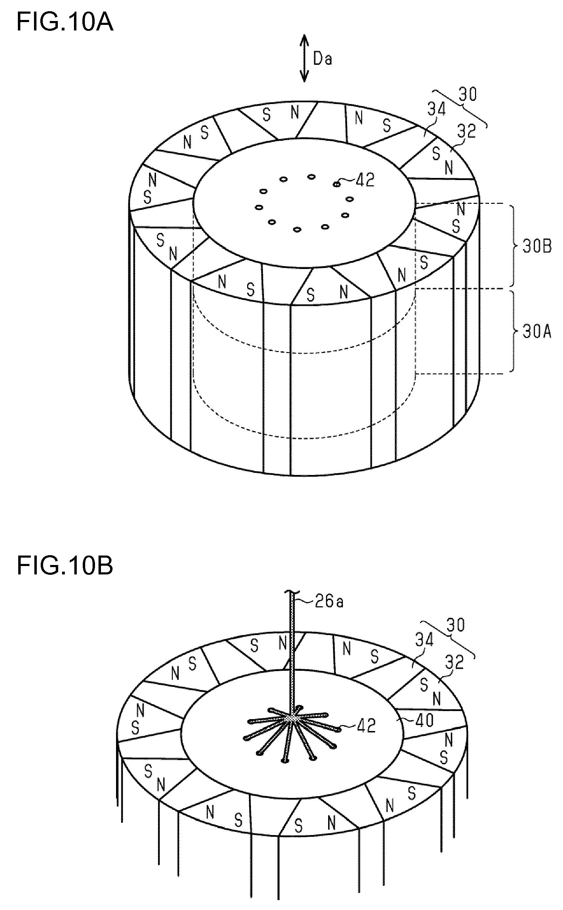

Functions of the present embodiment will be described. FIG. 10A shows the placing step of placing the guide member 40 such that the guide member 40 faces the core 22 in the axial direction Da. The sectional portions of the guide holes 42 shown in FIG. 9 face the insertion holes 24 formed in the core 22. The core facing portion 30A of the orienting/magnetizing device 30 faces the core 22, and the guide facing portion 30B of the orienting/magnetizing device 30 faces the guide member 40.

FIG. 10B shows the filling step of filling the insertion holes 24 of the core 22 with the magnet material 26a through the guide holes 42 of the guide member 40. When the magnet material 26a flows through the guide holes 42, the magnetic flux of the guide facing portion 30B of the orienting/magnetizing device 30 enters the guide member 40 in the radial direction and passes through the magnet material 26a in the guide holes 42. The easy magnetization directions of the magnet material 26a are thus oriented in the same direction, and the magnetic moment of the magnet material 26a is oriented in one of the pair of easy magnetization directions. The magnet material 26a is magnetized in this manner.

In particular, in the present embodiment, even if the magnet material 26a is flowing through the guide holes 42, the magnetic flux hardly enters the magnet material 26a in the sectional portions shown in FIGS. 4, 6, and 8. This is because the guide holes 42 are surrounded by the low magnetic permeability portions 46.

The magnetic permeability of the magnet material 26a is lower than that of the high magnetic permeability portions 44. Accordingly, the magnetic flux that has passed through the high magnetic permeability portions 44 located above and below the sections shown in FIGS. 4, 6, and 8 in the axial direction Da hardly passes through the magnet material 26a in the guide holes 42 in the sectional portions shown in FIGS. 4, 6, and 8. This is because, in the case where the magnetic flux that has passed through the high magnetic permeability portions 44 located above and below the sections shown in FIGS. 4, 6, and 8 in the axial direction Da enters the sections shown in FIGS. 4, 6, and 8, the overall magnetic resistance of the magnetic path is greater than in the case where the magnetic flux that has passed through the high magnetic permeability portions 44 located above and below the sections shown in FIGS. 4, 6, and 8 in the axial direction Da does not enter the sections shown in FIGS. 4, 6, and 8.

In the sectional portions shown in FIGS. 5, 7, and 9, however, the magnetic flux intensively enters the magnet material 26a. The reasons for this are as follows. Firstly, the magnetic paths Lmf that pass through the guide holes 42 but do not pass through the low magnetic permeability portions 46 can be formed in the sectional portions shown in FIGS. 5, 7, and 9. Secondly, the magnetic flux that has entered the high magnetic permeability portions 44 in the sectional portions shown in FIGS. 4, 6, and 8 enters the high magnetic permeability portions 44 and the magnet material 26a in the guide holes 42 in the sectional portions shown in FIGS. 5, 7, and 9. This is because the magnetic permeability of the high magnetic permeability portions 44 is higher than that of the low magnetic permeability portions 46.

The above embodiment has the following effects.
(1) The high magnetic permeability portions 44 that form the magnetic paths Lmf going into the guide member 40 from the outer periphery of the guide member 40, reaching the guide holes 42, and then returning to the outer periphery of the guide member 40 as shown in FIGS. 5, 7, and 9 have higher saturation magnetic flux density than the core 22. This can increase the density of the magnetic flux entering the magnet material 26a as compared to the case where a magnetic field is applied in the radial direction of the core 22 from the orienting/magnetizing device 30 so that the magnetic field is applied to the magnet material 26a in the insertion holes 24. This can restrain the density of the magnetic flux entering the magnet material 26a from being limited by the saturation magnetic flux density of the core 22.
(2) The low magnetic permeability portions 46 in the guide member 40 extend in the radial direction from the outer periphery of the guide member 40 to the guide holes 42. Since every short circuit path Lc includes the low magnetic permeability portion 46, the amount of magnetic flux in the short circuit paths Lc can be reduced.
(3) The guide member 40 has a stacked structure having first sections and second sections. The first sections are the sections where the magnetic flux having entered the guide member 40 from the outer periphery of the guide member 40 cannot avoid the low magnetic permeability portions 46 before reaching the guide holes 42 as shown in FIGS. 4, 6, and 8. The second sections are the sections where the magnetic flux having entered the guide member 40 from the outer periphery of the guide member 40 can avoid the low magnetic permeability portions 46 before reaching the guide holes 42 as shown in FIGS. 5, 7, and 9. The magnetic flux thus hardly enters the magnet material 26a in the guide holes 42 in the sections shown in FIGS. 4, 6, and 8. This is equivalent to or close to the state where a magnetic field is intermittently applied to the magnet material 26a when the magnet material 26a flows through the guide holes 42. This can facilitate movement of the magnetic particles of the magnet material 26a and improve the orientation rate. Moreover, since every short circuit path Lc includes the low magnetic permeability portion 46, most of the magnetic flux having entered the sections shown in FIGS. 4, 6, and 8 enters the sections shown in FIGS. 5, 7, and 9. Accordingly, the magnetic flux that enters the magnet material 26a in the guide holes 42 in the sections shown in FIGS. 5, 7, and 9 can be increased as compared to the case where the guide member 40 does not have the stacked structure.
(4) Each guide hole 42 is formed such that its sectional area perpendicular to the axial direction Da gradually increases as the guide hole 42 extends toward the core 22 in the axial direction Da and such that its sectional shape perpendicular to the axial direction Da is finally identical to the sectional shape of the insertion hole 24. This allows the magnet material 26a to be gradually oriented in an orientation direction required in the insertion holes 24 as it flows from the upstream side to the downstream side of the guide holes 42. In the case where the guide holes 42 are formed to have the same sectional shape as that of the insertion hole 24 at any position in the axial direction Da, the paths through which the magnet material 26a flows to the guide holes 42 tends to be required to have a sectional shape gradually changing to be identical to the sectional shape of the guide hole 42. In other words, the paths through which the magnet material 26a flows to the guide holes 42 tends to be required to have a sectional shape gradually changing to be identical to the sectional shape of the insertion hole 24.

Applying a magnetic field in these paths can improve the magnetization rate and the orientation rate as compared to the case of not applying a magnetic field in these paths. In the case where a magnetic field is applied in these paths, it is desirable that the guide holes 42 be these paths and the guide member 40 be a member that defines these paths. In the present embodiment, the orientation rate and the magnetization rate can therefore be efficiently improved by applying a magnetic field to the magnet material 26a passing through the paths whose sectional shape gradually changes along the axial direction Da to be identical to the sectional shape of the insertion hole 24.
(5) The orienting/magnetizing device 30 includes the core facing portion 30A that faces the core 22 in the radial direction, and a magnetic field is applied in the radial direction from the core facing portion 30A to the core 22. This can improve the orientation rate and the magnetization rate of the permanent magnets 26 as compared to the case where the orienting/magnetizing device 30 does not include the core facing portion 30A.
(6) The insertion holes 24 are filled with the magnet material 26a by injection molding. In this case, the magnet material 26a having fluidity is introduced into the insertion holes 24 through the guide holes 42. When the magnet material 26a has fluidity, the magnetic particles tend to be displaced, so that the easy magnetization directions of the magnetic particles can be easily oriented in the same direction in the guide holes 42.

At least one of the matters of the above embodiment may be modified as follows.

Regarding the high magnetic permeability portions (44), the high magnetic permeability portions 44 of the above embodiment are made of permendur. However, the present invention is not limited to this. For example, the high magnetic permeability portions 44 may be made of permalloy, spheroidal graphite cast iron (FCD), soft iron, etc. Namely, the high magnetic permeability portions 44 may be made of any material having higher saturation magnetic flux density than the core 22.

Regarding the low magnetic permeability portions (46), the low magnetic permeability portions 46 of the above embodiment are made of stainless steel. However, the present invention is not limited to this. For example, the low magnetic permeability portions 46 may be made of aluminum or copper.

Regarding the guide holes (42), the guide holes 42, each of which is formed such that its sectional area perpendicular to the axial direction Da gradually increases as the guide holes 42 extend toward the core 22 in the axial direction Da and such that its sectional shape perpendicular to the axial direction Da is finally identical to the sectional shape of the insertion hole 24, are not limited to the guide hole shown in FIG. 3. For example, the guide holes 42 may have the same shape and the same dimension as the insertion holes 24 in section perpendicular to the axial direction Da along a predetermined length of the guide member 40 in the axial direction Da from the core 22.

For example, the guide holes 42 may have the same shape and the same dimension as the insertion holes 24 in section perpendicular to the axial direction Da along the entire length in the axial direction Da of the guide member 40.

Regarding the core facing portion (30A), the core facing portion 30A is not limited to the one facing the entire core 22 along the axial direction Da of the core 22. For example, the core facing portion 30A may be formed by only a part facing half of the core 22 along the axial direction Da.

The guide member (40) may not include the low magnetic permeability portions 46 in FIG. 9.

The guide member 40 need not necessarily include the low magnetic permeability portions 46 in the sections of FIGS. 4 to 8 etc. The effect (1) can be achieved even if the guide member 40 does not include the low magnetic permeability portions 46 in the sections of FIGS. 4 to 8 etc. The guide member 40 may include only the minimum amount of low magnetic permeability portion 46 required for every short circuit path Lc to pass through the low magnetic permeability portion 46.

The entire part of the guide member 40 which faces the core 22, namely the entire bottom of the guide member 40 in FIG. 2, may be a low magnetic permeability portion. This can restrain the magnetic flux of the core facing portion 30A from entering the guide member 40 without entering the core 22.

Regarding the orienting/magnetizing device (30), the core facing portion 30A and the guide facing portion 30B may be separate members. In this case, a thin nonmagnetic material may be interposed between the core facing portion 30A and the guide facing portion 30B so that the nonmagnetic material faces the boundary portion between the guide member 40 and the core 22. This can also restrain the magnetic flux of the core facing portion 30A from entering the guide member 40 without entering the core 22.

The orienting/magnetizing device 30 need not necessarily include the core facing portion 30A.

The orienting/magnetizing device 30 is not limited to the one including the permanent magnets. For example, the orienting/magnetizing device 30 may include teeth each having a coil wound therearound (electromagnet).

The core is not limited to the stack of electrical steel sheets such as silicon steel sheets. For example, the core may be made of cast iron or soft iron.

The permanent magnets are not limited to those formed by injection molding. For example, the permanent magnets may be formed by compression molding. In the case of compression molding, resin-coated magnetic particles are used as a magnet material. In this case, as described in the paragraph regarding the guide holes, the guide holes 42 are formed to have the same shape and the same dimension as the insertion holes 24 in section perpendicular to the axial direction Da along the entire length in the axial direction Da of the guide member 40, and the filling step is performed by pressing the magnet material filling the guide holes 42 into the insertion holes 24 by a press guide. In this case, the orienting/magnetizing device 30 may not include the core facing portion 30A and the outer periphery of the core 22 may be covered by a member that is more rigid than the permanent magnets 32. This can restrain the core 22 from protruding radially outward even if a large pressure is applied to the insertion holes 24 by compression molding.

Regarding the rotor, the permanent magnets 26 are placed at the same phase in the circumferential direction Dc in each rotor unit 20 in FIG. 1. However, the present invention is not limited to this. For example, in FIG. 1, the permanent magnets 26 in the middle rotor unit 20 may be slightly shifted to the left in the circumferential direction Dc with respect to the permanent magnets 26 in the uppermost rotor unit 20, and the permanent magnets 26 in the lowermost rotor unit 20 may be slightly shifted to the left in the circumferential direction Dc with respect to the permanent magnets 26 in the middle rotor unit 20.

The number of rotor units 20 that form the rotor 10 is not limited to three. For example, the rotor 10 may be formed by two rotor units 20 or four or more rotor units 20. Alternatively, the rotor 10 may be formed by a single rotor unit 20.

The sectional shape of the permanent magnets 26 perpendicular to the axial direction Da is not limited to the U-shape. The sectional shape of the permanent magnets 26 perpendicular to the axial direction Da may a bisected U-shape, or may be a V-shape, a spoke shape, etc. The number of permanent magnets 26 disposed in the circumferential direction of the rotor 10 is not limited to 10.

The IPMSM is not limited to the one contained in an EPS. For example, the IPMSM may be contained in a variable gear ratio steering system. The IPMSM is not limited to the one contained in an actuator for turning steering wheels.

## Claims

1. A method for manufacturing an interior permanent magnet rotor unit that includes a core having a plurality of insertion holes and permanent magnets embedded in the insertion holes of the core, the interior permanent magnet rotor unit or a plurality of the interior permanent magnet rotor units being connected together in an axial direction of the core to form a rotor, the method comprising:
placing a guide member having guide holes corresponding to the insertion holes of the core such that the guide member is adjacent to the core in the axial direction of the core; and
applying a magnetic field in a radial direction of the guide member by an orienting/magnetizing device to apply the magnetic field to a magnet material, which is a material of the permanent magnets, in the guide holes when the magnet material passes through the guide holes, and filling the insertion holes of the core with the magnet material, wherein,
a member in the guide member which forms a magnetic path going into the guide member from an outer periphery of the guide member which faces the orienting/magnetizing device, reaching the guide hole, and then returning to the outer periphery of the guide member has higher saturation magnetic flux density than the core.

2. The method according to claim 1, wherein,
the guide member includes, in addition to a high magnetic permeability portion having higher saturation magnetic flux density than the core, a low magnetic permeability portion having lower magnetic permeability than the high magnetic permeability portion, and
the low magnetic permeability portion extends radially inward from the outer periphery of the guide member to the guide hole in a section of the guide member perpendicular to an axial direction of the guide member at a predetermined position in the axial direction.

3. The method according to claim 1 or 2, wherein,
the guide member includes, in addition to a high magnetic permeability portion having higher saturation magnetic flux density than the core, a low magnetic permeability portion having lower magnetic permeability than the high magnetic permeability portion, and
the guide member includes
a first section, or a section of the guide member which is perpendicular to an axial direction of the guide member at a first position in the axial direction, and in which magnetic flux having entered the guide member from the outer periphery of the guide member cannot avoid the low magnetic permeability portion before reaching the guide hole, and
a second section, or a section of the guide member which is perpendicular to the axial direction of the guide member at a second position in the axial direction, and in which the magnetic flux having entered the guide member from the outer periphery of the guide member can avoid the low magnetic permeability portion before reaching the guide hole.

4. The method according to any one of claims 1 to 3, wherein,
the guide hole is formed such that its sectional area perpendicular to an axial direction of the guide member gradually increases as the guide hole extends toward the core and such that its sectional shape perpendicular to the axial direction is finally identical to a sectional shape of the insertion hole.

5. The method according to any one of claims 1 to 4, wherein,
the orienting/magnetizing device includes a core facing portion that faces the core in a radial direction of the orienting/magnetizing device, and the core facing portion applies the magnetic field to the core in the radial direction.

6. The method according to any one of claims 1 to 5, wherein,
the insertion holes are filled with the magnet material by injection molding.

7. An apparatus for manufacturing an interior permanent magnet rotor, comprising:
the orienting/magnetizing device and the guide member in the method according to any one of claims 1 to 6.
